# EUROPÄISCHE PATENTANMELDUNG

(11) **EP 1 202 186 A2**
(43) Veröffentlichungstag der Anmeldung: **02.05.2002**
(21) Anmeldenummer: 01111780.1
(22) Anmeldetag: 15.05.2001
(51) Int. Cl.: G06F 17/30

(54) **Verfahren und Vorrichtung zur automatischen Pflanzenauswahl und automatischen Zusammenstellung von Pflanzgruppen**

(30) Priorität: 23.10.2000 DE 10052454
(71) Anmelder: Weber, Angelika, Dr., 81543 München (DE); Greiner, Karin, 85221 Dachau (DE)
(72) Erfinder: Weber, Angelika, Dr., 81543 München (DE); Greiner, Karin, 85221 Dachau (DE)
(74) Vertreter: Weber, Joachim, Dr.

(57) **Zusammenfassung**

Die Erfindung betrifft ein Verfahren sowie eine Vorrichtung zur automatischen Auswahl von Pflanzen nach verschiedenen Kriterien und/oder zur automatischen Erstellung einer Pflanzenauswahl für Pflanzgruppen. Dabei ist vorgesehen, dass aus einem Speicher in einem ersten Schritt Grundsatzfragen vorgelegt werden, die Standortfragen sowie Eigenschaftsfragen umfassen. Auf der Basis der Antworten dieser Auswahlfragen erfolgt die Ausarbeitung eines Pflanzvorschlages mittels einer Recheneinheit. Dabei werden Standortkriterien und Pflanzenmerkmale ebenso berücksichtigt wie Verfügbarkeitskriterien und Accessoiresdaten. Der Pflanzvorschlag wird mittels Ausgabemitteln automatisch ausgegeben, wobei das Resultat Einkaufslisten, Bestelllisten und/oder Pflanzeninformationen umfasst (Figur 1).

## Beschreibung

Die Erfindung bezieht sich auf eine Vorrichtung und ein Verfahren zur automatischen Pflanzenauswahl beziehungsweise zur Ausarbeitung von Pflanzvorschlägen.

Aus dem Stand der Technik sind unterschiedlichste Literaturquellen zur Pflanzenauswahl, zur Gartengestaltung, zum Arrangement von Pflanzen etc. vorbekannt. Dabei handelt es sich zum einen um Literatur, die sich mit der ästhetischen und designerischen Arbeit beschäftigt und die Gestaltung von Gärten, Beeten, Zimmerpflanzenarrangements und Ähnlichem befasst. Ein weiterer, großer Bereich der Literatur beschreibt Pflanzen hinsichtlich ihrer Eigenschaften, wie etwa Blütenform, Blütenfarbe, Wuchshöhe oder Ähnlichem, wobei derartige Beschreibungen meist in Form so genannter Pflanzenportraits vorliegen.

Für den Nichtfachmann stellt sich bei der Vorbereitung einer Pflanzmaßnahme somit das Problem, dass er eine Fülle von Einzelfaktoren und Literatur berücksichtigen muss, um seine Wunschpflanzen zu finden. Sobald er sich dann eine gewisse Vorstellung gemacht hat, wie sein Pflanzvorhaben aussehen soll, ergibt sich die Schwierigkeit, die Pflanzen daraufhin zu überprüfen, ob diese aus botanischer und gärtnerischer Sicht sinnvoll zu kombinieren und ansprechend zu arrangieren sind. Selbst wenn der Benutzer diesen Schritt mehr oder weniger erfolgreich hinter sich gebracht hat, ergibt sich für ihn die Frage, wo die von ihm gewünschten Pflanzen verfügbar sind und welche weiteren Aspekte er bei seinem Pflanzvorhaben berücksichtigen muss. Sucht der Benutzer einen Gartenfachbetrieb, etwa ein Gartencenter, eine Gärtnerei, einen Baumarkt mit Gartenabteilung oder dergleichen auf, wird er meist auch dort mit seinen Problemen alleingelassen oder muss sich mühsam seine Informationen erfragen.

Selbst bei sorgfältiger Vorbereitung stellt sich zumeist nur ein Zufallsergebnis ein, dessen Resultat in den meisten Fällen nicht optimal ist.

Der Erfindung liegt die Aufgabe zugrunde, ein Verfahren sowie eine Vorrichtung zur automatischen Pflanzenauswahl zu schaffen, welche bei einfacher Anwendbarkeit stets, also auch unerfahrenen Benutzern, ein optimales Ergebnis hinsichtlich der auszuwählenden Pflanzen und der benötigten Informationen liefern.

Erfindungsgemäß wird die Aufgabe durch die Merkmale der nebengeordneten Ansprüche gelöst, die jeweiligen Unteransprüche zeigen weitere vorteilhafte Ausgestaltungen der Erfindung.

Hinsichtlich der Vorrichtung zur automatischen Pflanzenauswahl ist vorgesehen, dass diese zumindest eine Eingabestation, zumindest einen Speicher, zumindest eine Recheneinheit und zumindest ein Ausgabemittel umfasst, wobei der Speicher mehrere Bereiche aufweist, nämlich zumindest einen ersten Bereich, in welchem Auswahlfragen für den Benutzer gespeichert sind, zumindest einen zweiten Bereich, in welchem Standortkriterien von Pflanzen gespeichert sind sowie zumindest einen dritten Bereich, in welchem Pflanzenmerkmale einer Vielzahl von Pflanzen gespeichert sind. Dabei ist vorgesehen, dass die Recheneinheit zur automatischen Vorlage von Auswahlfragen aus dem ersten Bereich des Speichers in die Eingabestation und zur automatischen Verknüpfung der Antworten der Auswahlfragen mit zumindest dem zweiten und dem dritten Bereich des Speichers sowie zur automatischen Ausgabe von Pflanzenvorschlägen und/oder Pflanzeninformationen durch die Ausgabemittel ausgebildet ist.

Hinsichtlich des Verfahrens zur automatischen Pflanzenauswahl sind die folgenden Arbeitsschritte vorgesehen: automatisches Bereitstellen von standardisierten Auswahlfragen an einer Eingabestation, automatische Zuordnung von Antwortdaten der Eingabestation zu Standortkriterien und/oder Pflanzenmerkmalen in einem Speicherbereich, und automatische Auswahl von Pflanzen gemäß den Standortkriterien und/oder Pflanzenmerkmalen und Anzeige der Resultate in Ausgabemitteln.

Sowohl das erfindungsgemäße Verfahren als auch die erfindungsgemäße Vorrichtung zeichnet sich durch eine Reihe erheblicher Vorteile aus.

Durch die Erfindung ist es erstmals möglich, vollautomatisch diese komplexe Aufgabe zu lösen, für eine geplante Pflanzmaßnahme eine optimale Auswahl der vorgesehenen Pflanzen zu treffen. So ist es möglich, diese Pflanzenauswahl anhand der vom Benutzer geplanten Pflanzmaßnahmen und -standorte zu treffen. Beispielsweise kann die Pflanzung einen Balkonkasten, ein Beet, ein Gewächshaus, einen Dachgarten, einen Steingarten, ein Fensterbrett, einen Innenraum oder Ähnliches betreffen. Im Rahmen der Standortkriterien oder Standortdaten erfolgt mittels der Recheneinheit eine erste Vorauswahl der in dem Speicher gespeicherten Pflanzendaten. Nachfolgend erfolgt vollautomatisch eine weitere Auswahl der für den jeweiligen Standort geeigneten Pflanzen. Hierbei gehen beispielsweise die Lichtverhältnisse ein. Es kann berücksichtigt werden, ob es sich um einen sonnigen Standort, um einen schattigen Standort, um einen Kunstlicht-Standort usw. handelt. Weiterhin werden die Angaben zur Bodenbeschaffenheit und - qualität berücksichtigt. Die Pflanzen werden automatisch entsprechend daraufhin ausgewählt, ob es sich beispielsweise um einen schweren Boden, einen sandigen Boden, einen kargen Boden, einen tiefgründigen Boden, einen sauren bzw. basischen Boden oder um ein anderes Substrat, z.B. künstliche Erden handelt. Weiterhin werden noch weitere Standortfaktoren berücksichtigt, wie etwa die Windverhältnisse, Wasserverhältnisse, Temperatur, die mechanische Belastung der Pflanzen durch Mensch, Tier oder sonstige Einflüsse, Abgaseinflüsse, Pflegeintensität oder Sichtschutzfaktoren.

Erfindungsgemäß ist die Möglichkeit gegeben, Wünsche des Benutzers hinsichtlich der Eigenschaften der Pflanze wie der Pflanzgruppe zu berücksichtigen, wie etwa Wuchshöhe, Wuchsform, Blütenform, Blütenfarbe, Blütezeit sowie besondere Eigenschaften der Pflanzen. Zu letzteren zählen beispielsweise Sichtschutz, benötigte Pflegeintensität, Wasserverbrauch, Nährstoffverbrauch, Duft oder ob es sich um Nutz- oder Zierpflanzen handeln soll. Die gewünschte Stilrichtung kann ebenfalls berücksichtigt werden. Es kann jedoch auch abgefragt werden, ob die vom Benutzer gewünschten Pflanzen verträglich für Kinder und/oder Tiere sein sollen, ob sie hinsichtlich ihrer toxischen Wirkung oder ihrer allergischen Wirkung geeignet sind, ob sie stachelig oder dornig sein können, ob sie Ansprüche hinsichtlich Feng Shui oder Esoterik erfüllen müssen und/oder ob sich Einschränkungen hinsichtlich der Anschaffungskosten und der Lebensdauer der Pflanzen ergeben. Es ist auch möglich, hierbei eine Auswahl zu treffen, ob die Pflanzen im Boden oder im Gefäß, in Erdsubstrat, Hydrokultur oder Ähnlichem wachsen sollen.

Erfindungsgemäß werden dem Benutzer somit in automatischer Abfolge eine Vielzahl derartiger Auswahlfragen vorgelegt, wobei diese vom Benutzer nachfolgend abgearbeitet und beantwortet werden. Die Auswahl der Auswahlfragen und deren Reihenfolge erfolgt dabei vollautomatisch, wobei die Recheneinheit die Vorlage der jeweils folgenden Auswahlfragen automatisch an die Beantwortung der vorangegangenen Fragen anknüpft, sodass unnötige oder sinnlose Fragen automatisch unterdrückt werden.

Nach der automatischen Vorlage der Auswahlfragen und der Zuordnung der jeweiligen Antworten erfolgt mittels der Recheneinheit die automatische Ausarbeitung eines Pflanzenvorschlags bzw. Pflanzvorschlags. Die Recheneinheit überprüft dabei die in dem Speicher hinterlegten Pflanzendaten zunächst hinsichtlich der Standortfragen und der Wunscheigenschaftsfragen. Dabei werden die Standortkriterien sowie die Pflanzenmerkmale der gespeicherten Pflanzen nacheinander verglichen, sodass als Ergebnis eine Auswahl oder Liste von Pflanzen vorliegt, die für den vorgegebenen Einsatzzweck optimal geeignet sind.

Dieses Ergebnis wird mittels der Ausgabemittel an den Benutzer ausgegeben. Die Ausgabemittel werden im Folgenden im Einzelnen noch beschrieben.

In einer bevorzugten Ausgestaltung sowohl der Vorrichtung als auch des Verfahrens ist vorgesehen, dass zusätzlich bei der Pflanzenauswahl auch Verfügbarkeitskriterien beziehungsweise Verfügbarkeitsdaten der Pflanzen überprüft werden. Hierfür umfasst die Vorrichtung einen weiteren Speicherbereich. In diesen Speicherbereich können beispielsweise die Inventurlisten oder der Lagerbestand eines Gartenfachbetriebes Eingang finden. Hierdurch wird vermieden, dass dem Benutzer Pflanzen vorgeschlagen werden, die überhaupt nicht oder zur Zeit nicht lieferbar sind. Weiterhin wird in diesem Zusammenhang beispielsweise auch überprüft, ob die richtige Jahreszeit oder Pflanzzeit vorliegt, um zu vermeiden, dass der Benutzer Pflanzen kauft beziehungsweise pflanzt, die zu dem vorgesehenen Zeitpunkt nicht einsetzbar sind.

In einer besonders vorteilhaften Ausgestaltung des erfindungsgemäßen Verfahrens ist weiterhin vorgesehen, dass bei der automatischen Zuordnung der Antwortdaten zu den Standortkriterien der Pflanzen schematisierte Standorte gebildet werden. Hierdurch kann sich die Rechenzeit ganz erheblich verkürzen, da für bestimmte Standorte und Einsatzzwecke auf standardisierte, bereits vorbereitete Vorschläge zurückgegriffen werden kann. So können beispielsweise bei der Bepflanzung von Balkonkästen oder Blumenkübeln im Frühjahr oder Frühsommer standardisierte Vorschläge unterbreitet werden.

In einer weiteren, günstigen Ausgestaltung des Verfahrens ist vorgesehen, dass bei der automatischen Auswahl der Pflanzen Verträglichkeitsdaten der Pflanzen berücksichtigt werden. Bevorzugterweise werden dabei Blütenfarbe, Wuchshöhe, Blütezeit, Blütenformen, Blattgröße, Wuchsform, Wasserbedarf und/oder Nährstoffbedarf berücksichtigt. Hierdurch wird vermieden, dass Pflanzen in einem Arrangement zueinander angeordnet werden, die sich gegenseitig beispielsweise überwuchern würden, bei denen einige Pflanzen ungleich viel Wasser oder Nährstoffe benötigen würden, oder die hinsichtlich der Blütenfarbe oder Blütenform nicht zueinander passen. Andererseits kann aufgezeigt werden, wie sich die Pflanzen gegenseitig positiv beeinflussen. Es wird somit automatisch erreicht, dass das ausgewählte Pflanzenarrangement in seiner Gesamtheit sowohl botanisch wie gärtnerisch als auch ästhetisch harmonisiert.

In günstiger Weiterbildung der Erfindung ist auch vorgesehen, dass durch Anzeige der Resultate der Benutzer die Möglichkeit einer individualisierenden Korrektureingabe und/oder einer Ablehnung des Pflanzvorschlages hat.

Erfindungsgemäß durchläuft dann das automatische Verfahren nochmals den vorangegangenen Schritt der Auswahlfragen. Der Benutzer kann dabei die von ihm gegebenen Antworten präzisieren und/oder korrigieren, sofern er mit dem Ergebnis des Pflanzvorschlages nicht einverstanden war.

Besonders günstig ist es, wenn bei der Anzeige der Resultate im Rahmen des Pflanzvorschlages Abbildungen der Pflanzen (auf Fotos oder Zeichnungen) oder zumindest eine Abbildung des gesamten Pflanzvorschlages (Pflanzenarrangements) und/oder weiterer Details erfolgt, wie etwa Pflanzanleitungen, Pflanzenschutzanleitungen Pflegeanleitungen und/oder Pflanzenportraits. In vollautomatischer Weise können somit sämtliche für den Benutzer interessanten Aspekte berücksichtigt und hinsichtlich der Informationen übermittelt werden. Mittels dieser Visualisierung erhält der Benutzer eine detaillierte Vorstellung seines Pflanzvorhabens.

Besonders vorteilhaft ist es, wenn dem Benutzer eine Bestell- und/oder Einkaufsliste als Resultat des automatisch ablaufenden Auswahlvorganges gegeben wird.

Um die Standortfragen präzise automatisch stellen zu können und um die entsprechenden Standortdaten der Pflanzen auswählen zu können, ist es erfindungsgemäß vorteilhaft, wenn das Verfahren bei den Standortdaten Daten zum Pflanzplatz, zu den Belichtungsverhältnissen, zur Bodenbeschaffenheit und/oder zu den weiteren Standortfaktoren berücksichtigt.

Da Pflanzungen oder Pflanzenarrangements auch praktischen und ästhetischen Anforderungen genügen müssen, ist es besonders vorteilhaft, wenn die Vorrichtung einen weiteren Speicherbereich umfasst, in welchem Accessoiresdaten gespeichert sind und das automatische Verfahren bei der Auswahl der Pflanzen diesen diese Accessoiresdaten zuordnet. Accessoiresdaten können beispielsweise die richtige und optisch und ästhetisch bevorzugte Auswahl von Pflanzgefäßen umfassen. Hierbei können Gefäße ausgewählt werden, die Staunässe vermeiden, die ausreichend groß sind, die optisch ansprechend sind, die für die jeweiligen Witterungsverhältnisse geeignet sind (Frostsicherheit, UV-Beständigkeit etc.). Weiterhin können hinsichtlich der Accessoiresdaten benötigte Kletterhilfen und Pflanzenstützen ausgewählt werden. Es können automatische Gieß- oder Bewässerungssysteme angeboten werden, ebenso Trittsteine, Beeteinfassungen, Beleuchtungskörper oder auch Beläge für Treppen, Wege oder Terrassen. Gleiches gilt für die automatische oder manuelle Düngung. Auch vorbeugende Maßnahmen zum Schädlingsschutz oder zur aktuellen Schädlingsbekämpfung sind möglich, beispielsweise Fallen für Insekten oder Ähnliches. Die Accessoiresdaten können auch Daten umfassen, die den eigentlichen Pflanzvorgang betreffen, etwa die Einbringung von Substrat oder Bodenzuschlagstoffen, die richtige Auswahl von geeigneter Erde etc. Weiterhin können die Accessoiresdaten Zierrat oder Ähnliches umfassen, welcher sich in besonderer Weise zu dem ausgewählten Pflanzenarrangement hinzufügen lässt, beispielsweise Glaskugeln, Figuren, Ziersteine oder Ähnliches.

Die Accessoiresdaten werden bevorzugterweise zusammen mit den Resultaten mittels der Ausgabemittel ausgegeben.

Die Eingabestation ist bevorzugterweise in Form eines Benutzerterminals ausgebildet. In gleicher Weise ist es vorteilhaft, wenn die Eingabestation als Internet-Terminal konzipiert ist, sodass der Benutzer die automatische Pflanzenauswahl über das Internet abrufen kann.

Die Anzeige der Resultate erfolgt bevorzugterweise an einem Bildschirm, die Resultausgabe wird in günstiger Weise mittels eines Druckers in Papierform erfolgen. Es ist jedoch auch möglich, dem Benutzer Speichermedien zur Hand zu geben, wie beispielsweise eine Diskette oder eine CD, auf welcher das Ergebnis des Auswahlvorganges inklusive der Darstellung der einzelnen Pflanzen, der Darstellung des Pflanzarrangements sowie der zusätzlichen Informationen gespeichert ist.

Wie die Ausführungen zeigen, führt die Erfindung sowohl für den Benutzer als auch etwa für einen Gartenfachbetrieb zu einer erheblichen Einsparung von Zeit und Geld, da keine Fachkraft mehr befragt bzw. zur Verfügung gestellt werden muss. Auch eine zeitraubende und mühsame Recherche innerhalb verschiedenster Literaturquellen entfällt somit.

Im Folgenden wird die Erfindung anhand eines Ausführungsbeispiels in Verbindung mit der Zeichnung beschrieben. Diese zeigt:
- Fig. 1: eine vereinfachte, schematische Darstellung der Hardware der erfindungsgemäßen Vorrichtung, und

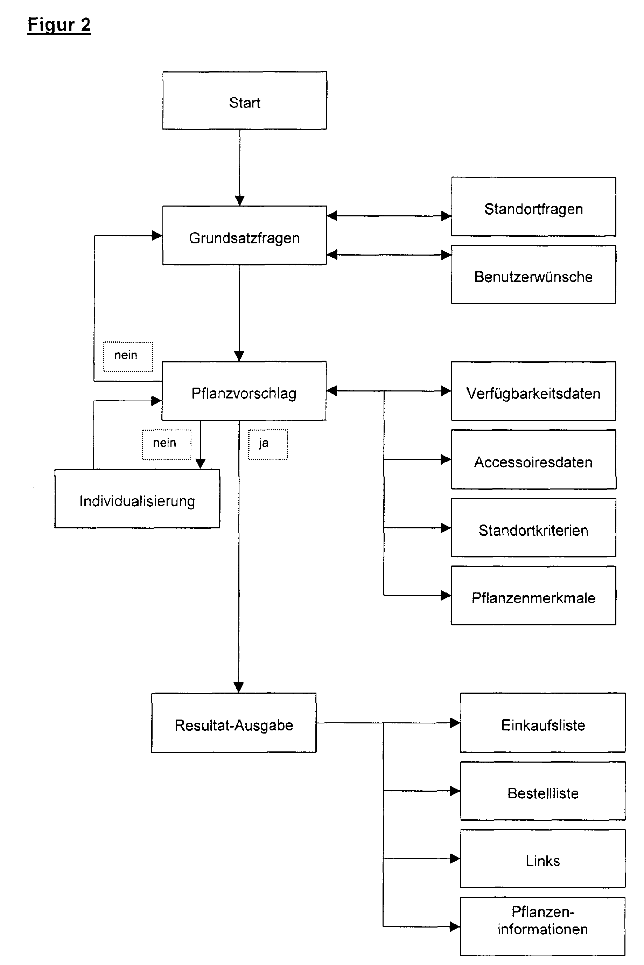

- Fig. 2: eine vereinfachte Darstellung des Ablaufs des erfindungsgemäßen Verfahrens.

In Fig. (1) ist in schematischer Weise die Hardware der erfindungsgemäßen Vorrichtung dargestellt. Diese umfasst zunächst eine Eingabestation (1). Diese weist bevorzugterweise einen Bildschirm sowie Eingabemittel (Tastatur oder Maus) auf. Die Eingabestation kann jedoch auch einen Touch Screen oder einen Internetanschluss umfassen.

Die Vorrichtung umfasst weiterhin eine Recheneinheit (3), welcher ein Speicher (2) zugeordnet ist. Die Recheneinheit (3) mit dem Speicher (2) kann der Eingabestation direkt zugeordnet oder mit dieser über Datenleitung verbunden sein.

Speicher (2) weist bevorzugterweise mehrere Speicherbereiche auf, nämlich einen ersten Speicherbereich (5) zur Speicherung von Grundsatzfragen, einen zweiten Speicherbereich (6) zur Speicherung von Standortkriterien, einen dritten Speicherbereich (7) zur Speicherung von Pflanzenmerkmalen, einen vierten Speicherbereich (8) zur Speicherung von Verfügbarkeitskriterien sowie einen fünften Speicherbereich (9) für Accessoiresdaten.

Die Recheneinheit ist mit Ausgabemitteln (4) verbunden, die in Form eines Bildschirms, eines Druckers oder in Form einer Datenleitung zur Verbindung mit dem PC eines Benutzer über Internet oder Ähnliches ausgebildet ist.

Die Fig. (2) zeigt den vereinfachten Ablauf des erfindungsgemäßen Verfahrens.

Nach dem Start des automatischen Auswahlverfahrens legt die Recheneinheit (3) dem Benutzer zunächst automatisch eine Abfolge von Grundsatzfragen vor. Diese Grundsatzfragen werden von der Recheneinheit nach logischen und sinnvollen Kriterien nacheinander ausgewählt. In Abhängigkeit von der jeweiligen Antwort des Benutzer sucht die Recheneinheit die nächste in Frage kommende Antwort aus und stellt sie dem Benutzer automatisch an der Eingabestation zur Verfügung.

Bei dem Ausführungsbeispiel betreffen die ersten Grundsatzfragen zunächst den gewünschten Standort der Pflanzmaßnahme. Eine der ersten Fragen wird sich somit darauf beziehen, ob eine Freilandpflanzung vorgenommen oder ob unter Glas, etwa im Gewächshaus, gepflanzt werden soll, ob es sich um eine Zimmerpflanzen-Auswahl, beispielsweise für ein Fenster, einen Wintergarten oder einen Innenraum handelt. Dabei kann der Benutzer angeben, ob er ein Beet bepflanzen möchte oder einen Balkonkasten, Blumenkübel oder ein einzelnes Standgefäß. Er kann angeben, ob es sich um einen Ziergarten, einen Nutzgarten, einen Dachgarten, eine Teichbepflanzung, einen Steingarten, ein Gewächshaus, ein Grab oder Ähnliches handelt. Es versteht sich, dass die oben stehende Aufzählung nicht abschließend ist.

Nach der Gliederung dieser allgemeinen Grundvoraussetzungen werden dem Benutzer automatisch Fragen angegeben, die sich mit der Beleuchtung oder Belichtung des geplanten Standortes beschäftigen. Es wird beispielsweise gefragt, ob es sich um einen sonnigen oder schattigen Standort handelt, um einen Standort mit Halbschatten oder Kunstlicht. Weiterhin kann dabei abgeklärt werden, ob bereits weitere sonstige Planzungen oder Pflanzen in direkter Nähe vorhanden sind, beispielsweise hohe Bäume.

Eine weitere Gruppe der automatisch zu präsentierenden Standortfragen betrifft den Boden bzw. die Bodenbeschaffenheit. Es ist zu unterscheiden, ob der Boden schwer, sandig, karg, tiefgründig, sauer bzw. basisch ist oder ob eine Pflanzung in einem Pflanzgefäß oder in Hydrokultur oder in einem Substrat erfolgen soll.

Des Weiteren umfassen die automatisch vorzulegenden Standortfragen weitere Faktoren wie Wind, Regen, Temperatur, mechanische Belastung durch Mensch oder Tier oder Abgase. Auch Fragen hinsichtlich des gewünschten Sichtschutzes oder der Pflegeintensität (laufende Pflege, Laubanfall im Herbst, etc.) werden gestellt.

Es versteht sich, dass diese oben genannten Standortfragen nicht abschließend sind. Die Zuordnung der Standortfragen erfolgt in automatischer Weise, so dass unsinnige oder unnötige Fragen dem Benutzer nicht gestellt werden. Weiterhin werden die Standortfragen in Abhängigkeit von den in dem Speicher aufgelisteten Pflanzen ausgewählt. Sollte das vorhandene Pflanzenangebot oder der Speicherbestand gewisse Standorte von vornherein ausschließen, so werden derartige Fragen automatisch unterdrückt.

Nach der Klärung der Standortfragen werden dem Benutzer automatisch Auswahlfragen vorgelegt, die sich auf die Wunscheigenschaften der auszuwählenden Pflanzen beziehen. Dabei wird beispielsweise gefragt nach der Pflegeintensität, nach dem Gieß- und Düngeverhalten des Benutzers (Wasserverbrauch, Nährstoffverbrauch). Es wird abgeklärt, ob die Pflanzen für Kinder oder Tiere verträglich sein sollen, ob sie toxische Kriterien oder allergische Kriterien erfüllen müssen. Dabei wird ebenfalls gefragt, ob der Benutzer die Pflanze als Sichtschutz haben möchte. Auch die Frage, ob die Pflanze dornig oder stachelig sein kann, wird überprüft. Weiterhin wird gefragt, ob die Pflanze in Erde oder Hydrokultur oder in sonstiger Weise gezogen werden soll. Auch Fragen hinsichtlich der Kosten sowie der gewünschten Lebensdauer können gestellt werden. Zusätzlich sind Fragen weltanschaulicher oder sonstiger Art möglich, beispielsweise nach der Stilrichtung, oder ob die Pflanze nach Feng Shui-Gesichtspunkten oder esoterischen Gesichtspunkten oder Ähnlichem auszuwählen ist. Auch die Frage, ob es sich um eine Duft- und/oder Heilpflanze handeln soll, wird hier gestellt. Durch die automatische Bereitstellung der Antworten der Auswahlfragen erfolgt erfindungsgemäß nunmehr ein Abgleich mit dem zweiten und/oder dem dritten Bereich (6), (7) des Speichers (2). In diesen Bereichen sind Standortkriterien und Pflanzenmerkmale gespeichert. Die Recheneinheit ermittelt aufgrund der vorgegebenen Kriterien die geeignete Pflanze oder die geeigneten Pflanzen und legt deren Daten oder deren Speicheradresse in einem Zwischenspeicher ab. Bei dem gezeigten Ausführungsbeispiel erfolgt zusätzlich eine Überprüfung mit den in einem vierten Speicherbereich (8) hinterlegten Verfügbarkeitskriterien. Diese betreffen beispielsweise sowohl die Pflanzzeit, als auch den Lagerbestand bzw. die Inventurliste des auszuwählenden Gartenfachbetriebs.

Pflanzen, die hinsichtlich der Pflanzzeit, der Jahreszeit und/oder hinsichtlich des Lagerbestandes ausscheiden, werden bei der Erarbeitung des Pflanzvorschlages automatisch unterdrückt.

Weiterhin berücksichtigt die Recheneinheit die Daten eines fünften Speicherbereichs (9), der Accessoiresdaten auflistet. Die Accessoiresdaten umfassen beispielsweise die Auswahl geeigneter Gefäße aus botanischer und ästhetischer Sicht. Es wird dem Benutzer beispielsweise angeboten, einen Balkonkasten mit einem Bewässerungssystem auszuwählen, ein Terrakottagefäß zu verwenden oder einen entsprechenden Übertopf zu berücksichtigen. Bauliches Beiwerk wie Trittsteine, Beeteinfassungen, Beleuchtungskörper oder auch Beläge für Treppen, Wege oder Terrassen kann ebenfalls mit einbezogen werden. Zusätzlich können dem Benutzer benötigte Gießsysteme angeboten werden, die beispielsweise die von ihm gewählte Pflegeintensität berücksichtigen. Auch für die Pflanze erforderliche Maßnahmen können angegeben werden, wie beispielsweise Kletterhilfen und Pflanzenstützen. Es kann dem Benutzer auch geraten werden, bereits vorbeugend Schädlingsbekämpfungsmaßnahmen oder Schädlingsschutz zu betreiben, beispielsweise durch Bereitstellung von Insektenfallen oder Ähnlichem. Auch Zierrat, wie etwa Glaskugeln, Tierfiguren, Phantasiefiguren oder Ähnliches können dem Pflanzvorschlag zugeordnet werden.

Nach der automatischen Auswahl und Zuordnung der entsprechenden Daten wird dem Benutzer ein Pflanzvorschlag unterbreitet. Dieser erfolgt bevorzugterweise an einem Bildschirm, es ist jedoch auch möglich, den Pflanzvorschlag direkt auszudrucken. Dem Benutzer werden dabei nicht nur die entsprechenden Daten zur Verfügung gestellt, vielmehr wird ihm für jede Pflanze ein Foto oder eine Abbildung gezeigt. Zusätzlich erhält der Benutzer automatisch eine Gesamtzuordnung der Pflanzen, so dass er sich das gesamte Ensemble ansehen kann.

Der Benutzer hat dann die Möglichkeit, den Pflanzvorschlag zu akzeptieren, sodass die Resultatausgabe erfolgen kann. Er hat jedoch auch die Möglichkeit, den Pflanzvorschlag insgesamt abzulehnen, sodass das Verfahren zu den Grundsatzfragen zurückkehrt. Dieser Ablauf ist beispielsweise dann sinnvoll, wenn der Benutzer eine oder mehrere der vorgeschlagenen Pflanzen ablehnt und deshalb der Pflanzvorschlag für ihn nicht annehmbar ist.

Alternativ hierzu kann der Benutzer auch eine Individualisierung vornehmen, indem er beispielsweise einzelne Pflanzen streicht oder durch andere ersetzt und dann einen erneuten Pflanzvorschlag erhält.

Die Figur (2) zeigt bei der Resultatausgabe verschiedene Möglichkeiten. Zum einen erhält der Benutzer eine Einkaufsliste, auf welcher die einzelnen Pflanzen sowie Accessoires im einzelnen aufgelistet sind. Bei Verwendung des erfindungsgemäßen Verfahrens in einem Gartenfachbetrieb kann unten auch angegeben werden, wo er dort die einzelnen Pflanzen erhalten kann. Es ist auch möglich, ihm anzugeben, welcher von mehreren Gartenfachbetrieben für ihn am besten geeignet ist. Zusätzlich umfaßt die Einkaufsliste eine detaillierte Kostenaufstellung, aus der der Benutzer die Gesamtkosten ersehen kann.

Alternativ hierzu kann dem Benutzer auch eine Bestellliste angeboten werden, die ähnliche Daten wie die Einkaufsliste enthält. Die Bestellliste kann beispielsweise über Internet oder Telefax oder auf sonstige Weise einem Gartencenter übermittelt werden, welches die gewünschten Produkte dem Benutzer liefert. Hierbei ist ein elektronischer Kaufvorgang möglich, der beispielsweise direkt über Kreditkarten abgerechnet wird.

Die Resultatausgabe hat auch die Aufgabe, dem Benutzer weitere Literatur oder Information zu liefern oder ihn mit Informationen zu Gartenbaubetrieben, Buchvorlagen, Fernsehsendungen oder Ähnlichem zu versorgen.

Die Resultatausgabe umfaßt weiterhin Pflanzeninformationen, die entsprechend ausgedruckt werden und/oder auf einem elektronischen Speichermedium vorliegen. So können dem Benutzer beispielsweise Pflanzanleitungen gegeben werden, die ihm detailliert angeben, wie er die gekauften Pflanzen einsetzen soll. Es werden dem Benutzer Pflege-/Kulturanleitungen gegeben, die ihm sagen, wann er welche Pflegemaßnahmen durchzuführen hat. Der Benutzer kann detaillierte Aufstellungen zum Schutz der Pflanzen erhalten, um z.B. auf Schädlingsbefall, widrige Witterungseinflüsse, Frost und dergleichen durch geeignete Maßnahmen reagieren zu können. Die Pflanzeninformationen umfassen auch detaillierte Portraits der Pflanzen sowie Zusammenstellungen der sinnvollen oder nützlichen weiteren Accessoires.

In einer alternativen Ausgestaltung des Verfahrens ist es auch möglich, bei den Grundsatzfragen festzulegen, ob der Benutzer bereits ganz gezielt eine oder mehrere Pflanzen ausgewählt hat, die er pflanzen möchte. Es ist dann möglich, die geeigneten Standortfragen oder Wunscheigenschaftsfragen auszuwählen oder diese Fragen gänzlich zu unterdrücken. Gibt der Benutzer beispielsweise eine bestimmte Pflanze vor, so kann überprüft werden, ob diese Pflanze für den vom Benutzer gewünschten Standort sinnvoll ist oder ob er sich der Eigenschaften der Pflanze bewußt ist. Die Eingabe der Pflanze kann dabei sowohl mit dem botanischen Namen als auch mit dem beispielsweise deutschen Trivialnamen erfolgen. Bei der automatischen Berechnung des Pflanzvorschlages werden dann besonders die Verfügbarkeitskriterien und die sedaten überprüft.

Aus der oben stehenden Erläuterung ergibt sich, dass es sich bei der Erfindung um ein vollautomatisches Verfahren handelt, bei welchem durch die Recheneinheit aus verschiedenen Bereichen eines Speichers Pflanzen, Pflanzeninformationen sowie weitere Informationen den Eingangsdaten zugeordnet werden, um einen Pflanzvorschlag auszuarbeiten. Die Eingangsdaten werden dabei in logischer Abfolge automatisch dadurch abgefragt, dass dem Benutzer geeignete Auswahlfragen vorgelegt werden. Der gesamte Ablauf des Verfahrens erfolgt somit ohne menschliche Beeinflussung und ohne jede Zuhilfenahme der menschlichen Verstandestätigkeit. Es handelt sich somit um ein rein automatisches, technisches Verfahren.

Es versteht sich, dass die Erfindung nicht auf die beschriebenen Verfahrensschritte sowie die beschriebenen Komponenten der Vorrichtung beschränkt ist.

Das erfindungsgemäße Verfahren ist insbesondere in allen weiteren automatisch durchzuführenden Ablaufschritten einsetzbar, insbesondere über Internet und e-commerce. Es ist dabei auch möglich, zusätzliche Benutzerdaten zu erfragen, die Alter und Geschlecht des Benutzer sowie sein Wohn- und Freizeitverhalten umfassen. Dabei kann berücksichtigt werden, ob der Benutzer über einen eigenen Garten verfügt, wie groß dieser Garten ist, welche Pflanzmaßnahmen bereits durchgeführt wurden oder ob der Benutzer über eine Wohnung, eine Terrasse, einen Dachgarten oder einen Balkon verfügt. Auch diese Daten können bei der Auswahl der Pflanzvorschläge Berücksichtigung finden.

Im Folgenden wird die Erfindung anhand von Klauseln beschrieben:
1. Automatische Pflanzenauswahlvorrichtung mit zumindest einer Eingabestation (1), mit zumindest einem Speicher (2), mit einer Recheneinheit (3) und mit Ausgabemitteln (4), dadurch gekennzeichnet, dass der Speicher (2) einen ersten Bereich (5) umfaßt, in welchem Grundsatzfragen gespeichert sind, sowie einen zweiten Bereich (6), in welchem Standortkriterien der Pflanzen gespeichert sind, und einem dritten Bereich (7), in welchem Pflanzenmerkmale einer Vielzahl von Pflanzen gespeichert sind, wobei die Recheneinheit (3) zur automatischen Vorlage von Grundsatzfragen aus dem ersten Bereich (5) des Speichers (2) an die Eingabestation (1) und zur automatischen Verknüpfung der Antworten der Grundsatzfragen mit zumindest dem zweiten und dritten Bereich (6), (7) des Speichers (2) sowie zur automatischen Ausgabe von Pflanzenvorschlägen und/oder Pflanzeninformationen durch die Ausgabemittel (4) ausgebildet ist.
2. Vorrichtung nach Klausel (1), dadurch gekennzeichnet, dass der Speicher (2) einen vierten Bereich (8), in welchem Verfügbarkeitskriterien von Pflanzen gespeichert sind, umfaßt.
3. Vorrichtung nach Klausel (1) oder (2), dadurch gekennzeichnet, dass der Speicher (2) einen fünften Bereich (9) umfaßt, in welchem Accessoiresdaten gespeichert sind.
4. Vorrichtung nach einer der Klauseln (1) bis (3), dadurch gekennzeichnet, dass die Eingabestation (1) in Form eines Kundenterminals ausgebildet ist.
5. Vorrichtung nach einer der Klauseln (1) bis (4), dadurch gekennzeichnet, dass die Eingabestation (1) als Internet-Terminal ausgebildet ist.
6. Vorrichtung nach einer der Klauseln (1) bis (5), dadurch gekennzeichnet, dass die Anzeige der Resultate an einem Bildschirm erfolgt.
7. Vorrichtung nach einer der Klauseln (1) bis (6), dadurch gekennzeichnet, dass die Resultate mittels eines Drukkers ausdruckbar sind.
8. Verfahren zur automatischen Pflanzenauswahl mit folgenden Schritten:
   - automatisches Bereitstellen von standardisierten Auswahlfragen an einer Eingabestation (1),
   - automatische Zuordnung von Antwortdaten der Eingabestation (1) zu Standortkriterien und/oder Pflanzenmerkmalen in einem Speicherbereich (6), (7),
   - automatische Auswahl von Pflanzen gemäß den Standortkriterien und/oder Pflanzenmerkmalen und Anzeige der Resultate in Ausgabemittel (4).
9. Verfahren nach Klausel (8), dadurch gekennzeichnet, dass bei der Auswahl der Pflanzen ein Abgleich mit Verfügbarkeitsdaten der auszuwählenden Pflanzen erfolgt.
10. Verfahren nach Klausel (8) oder (9), dadurch gekennzeichnet, dass bei der automatischen Zuordnung der Antwortdaten zu den Standortkriterien der Pflanzen schematisierte Standorte gebildet werden.
11. Verfahren nach einer der Klauseln (8) bis (10), dadurch gekennzeichnet, dass bei der automatischen Auswahl der Pflanzen Verträglichkeitsdaten der Pflanzen berücksichtigt werden.
12. Verfahren nach einer der Klauseln (8) bis (11), dadurch gekennzeichnet, dass die Verträglichkeitsdaten Blütenfarbe, Wuchshöhe, Blütezeit, Blütenform, Wuchs, Stilrichtung, Wasserbedarf und/oder Nährstoffbedarf umfassen.
13. Verfahren nach einer der Klauseln (8) bis (12), dadurch gekennzeichnet, dass nach Anzeige der Resultate individualisierende Korrekturen-Eingaben an der Eingabestation (1) zum nochmaligen automatischen Durchlauf der Verfahrensschritte führen.
14. Verfahren nach einer der Klauseln (8) bis (13), dadurch gekennzeichnet, dass die Anzeige der Resultate Abbildungen der Pflanzen, zumindest eine Abbildung des gesamten Pflanzvorschlages, Pflanzanleitungen, Pflegeanleitungen, Pflanzenschutzanleitungen und/oder Pflanzenportraits umfaßt.
15. Verfahren nach einer der Klauseln (8) bis (14), dadurch gekennzeichnet, dass die Anzeige der Resultate eine Bestell- und/oder Einkaufsliste umfaßt.
16. Verfahren nach einer der Klauseln (8) bis (15), dadurch gekennzeichnet, dass die Standortdaten Daten zu Pflanzplatz, Belichtungsverhältnissen, weiteren Standortfaktoren und/oder Bodenbeschaffenheit umfassen.
17. Verfahren nach einer der Klauseln (8) bis (16), dadurch gekennzeichnet, dass bei der Auswahl der Pflanzen Accessoiresdaten zugeordnet werden.
18. Verfahren nach Klausel (17), dadurch gekennzeichnet, dass die Accessoiresdaten Daten zu Pflanzgefäßen, Kletterhilfen, Gießsystemen, Düngung, Schädlingsschutz, Pflanzmedium und/oder Ziergegenständen umfassen.
19. Vorrichtung nach einer der Klauseln (17) oder (18), dadurch gekennzeichnet, dass die Accessoiresdaten mit den Resultaten mittels der Ausgabemittel (4) ausgegeben werden.

### Zusammenfassend ist folgendes festzustellen:

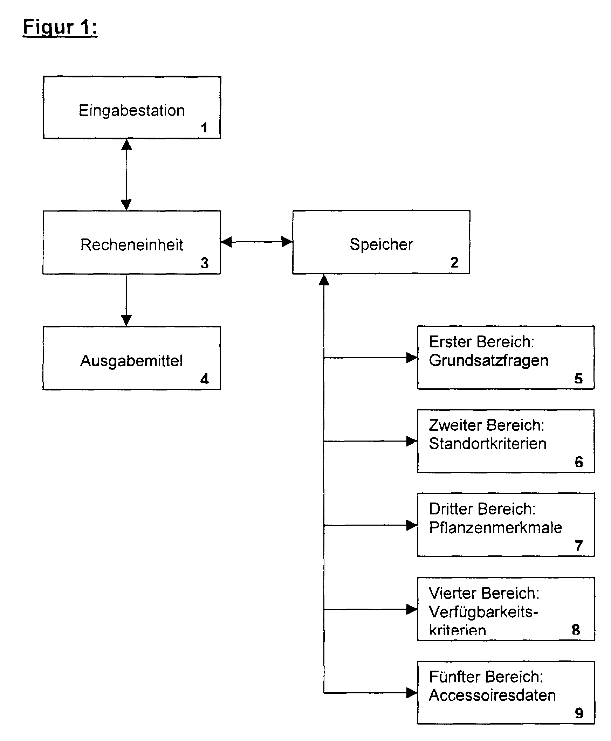

Die Erfindung betrifft ein Verfahren sowie eine Vorrichtung zur automatischen Auswahl von Pflanzen nach verschiedenen Kriterien und/oder zur automatischen Erstellung einer Pflanzenauswahl für Pflanzgruppen. Dabei ist vorgesehen, dass aus einem Speicher in einem ersten Schritt Auswahlfragen vorgelegt werden, die Standortfragen sowie Eigenschaftsfragen umfassen. Auf der Basis der Antworten dieser Auswahlfragen erfolgt die Ausarbeitung eines Pflanzvorschlages mittels einer Recheneinheit. Dabei werden Standortkriterien und Pflanzenmerkmale ebenso berücksichtigt wie Verfügbarkeitskriterien und Accessoiresdaten. Der Pflanzvorschlag wird mittels Ausgabemitteln automatisch ausgegeben, wobei das Resultat Einkaufslisten, Bestelllisten und/oder Pflanzeninformationen umfasst (Figur 1).

## Patentansprüche

1. Automatische Pflanzenauswahlvorrichtung mit zumindest einer Eingabestation (1), mit zumindest einem Speicher (2), mit einer Recheneinheit (3) und mit Ausgabemitteln (4), **dadurch gekennzeichnet, dass** der Speicher (2) einen ersten Bereich (5) umfaßt, in welchem Grundsatzfragen gespeichert sind, sowie einen zweiten Bereich (6), in welchem Standortkriterien der Pflanzen gespeichert sind, und einem dritten Bereich (7), in welchem Pflanzenmerkmale einer Vielzahl von Pflanzen gespeichert sind, wobei die Recheneinheit (3) zur automatischen Vorlage von Grundsatzfragen aus dem ersten Bereich (5) des Speichers (2) an die Eingabestation (1) und zur automatischen Verknüpfung der Antworten der Grundsatzfragen mit zumindest dem zweiten und dritten Bereich (6), (7) des Speichers (2) sowie zur automatischen Ausgabe von Pflanzenvorschlägen und/oder Pflanzeninformationen durch die Ausgabemittel (4) ausgebildet ist.

2. Vorrichtung nach Anspruch (1), **dadurch gekennzeichnet, dass** der Speicher (2) einen vierten Bereich (8), in welchem Verfügbarkeitskriterien von Pflanzen gespeichert sind, umfaßt.

3. Vorrichtung nach Anspruch (1) oder (2), **dadurch gekennzeichnet, dass** der Speicher (2) einen fünften Bereich (9) umfaßt, in welchem Accessoiresdaten gespeichert sind.

4. Verfahren zur automatischen Pflanzenauswahl mit folgenden Schritten:
- automatisches Bereitstellen von standardisierten Auswahlfragen an einer Eingabestation (1),
- automatische Zuordnung von Antwortdaten der Eingabestation (1) zu Standortkriterien und/oder Pflanzenmerkmalen in einem Speicherbereich (6), (7),
- automatische Auswahl von Pflanzen gemäß den Standortkriterien und/oder Pflanzenmerkmalen und Anzeige der Resultate in Ausgabemittel (4).

5. Verfahren nach Anspruch (4), **dadurch gekennzeichnet, dass** bei der Auswahl der Pflanzen ein Abgleich mit Verfügbarkeitsdaten der auszuwählenden Pflanzen erfolgt.

6. Verfahren nach Anspruch (4) oder (5), **dadurch gekennzeichnet, dass** bei der automatischen Zuordnung der Antwortdaten zu den Standortkriterien der Pflanzen schematisierte Standorte gebildet werden.

7. Verfahren nach einem der Ansprüche (4) bis (6), **dadurch gekennzeichnet, dass** bei der automatischen Auswahl der Pflanzen Verträglichkeitsdaten der Pflanzen berücksichtigt werden.

8. Verfahren nach einem der Ansprüche (4) bis (7), **dadurch gekennzeichnet, dass** nach Anzeige der Resultate individualisierende Korrekturen-Eingaben an der Eingabestation (1) zum nochmaligen automatischen Durchlauf der Verfahrensschritte führen.

9. Verfahren nach einem der Ansprüche (4) bis (8), **dadurch gekennzeichnet, dass** die Anzeige der Resultate Abbildungen der Pflanzen, zumindest eine Abbildung des gesamten Pflanzvorschlages, Pflanzanleitungen, Pflegeanleitungen, Pflanzenschutzanleitungen und/oder Pflanzenportraits umfaßt.

10. Verfahren nach einem der Ansprüche (4) bis (9), **dadurch gekennzeichnet, dass** die Anzeige der Resultate eine Bestell- und/oder Einkaufsliste umfaßt.
